# EUROPÄISCHE PATENTSCHRIFT

(11) **EP 4 001 027 B1**
(45) Veröffentlichungstag und Bekanntmachung des Hinweises auf die Patenterteilung: **22.05.2024**
(21) Anmeldenummer: 20209428.0
(22) Anmeldetag: 24.11.2020
(51) Int. Cl.: B60S 9/12, F15B 11/17, B65D 90/14, B66F 3/46, B60P 3/40

(54) **HYDRAULIKSYSTEM FÜR EIN FAHRZEUG ODER EINEN CONTAINER SOWIE FAHRZEUG ODER CONTAINER MIT EINEM SOLCHEN HYDRAULIKSYSTEM**
HYDRAULIC SYSTEM FOR A VEHICLE OR A CONTAINER AND VEHICLE OR CONTAINER WITH SUCH A HYDRAULIC SYSTEM
SYSTÈME HYDRAULIQUE POUR UN VÉHICULE OU UN CONTENEUR, VÉHICULE OU CONTENEUR DOTÉ D'UN TEL SYSTÈME HYDRAULIQUE

(43) Veröffentlichungstag der Anmeldung: 25.05.2022
(73) Patentinhaber: E & P Hydraulics B.V., 2153 GD Nieuw-Vennep (NL); STS Industries GmbH, 89160 Dornstadt (DE)
(72) Erfinder: Grooters, Frank Paul, 1171 DS Badhoevedorp (NL)
(74) Vertreter: Witte, Weller und Partner Patentanwälte mbB Stuttgart

(56) Entgegenhaltungen:
- CN-U- 203 161 689
- FR-A- 1 284 067
- GB-A- 1 452 249
- US-A- 5 915 700
- US-A1- 2011 024 706

## Beschreibung

### ANWENDUNGSGEBIET UND STAND DER TECHNIK

Die Erfindung betrifft ein Hydrauliksystem zur Abstützung eines Fahrzeugs oder eines Containers auf einem Untergrund.

Insbesondere aus dem Bereich der Caravan-Anhänger und der Wohnmobile ist es bekannt, dass im stationären Betrieb Bodenstützen ausgefahren werden, um das Fahrzeug auszurichten, insbesondere um den Boden eines Innenraums horizontal auszurichten. Auch bei nicht selbst fahrfähigen Containern, beispielsweise Wohncontainern, ist ähnliches bekannt.

Das Ausfahren der Bodenstützen erfolgt dabei in vielen Fällen mittels eines hydraulischen Antriebsystems, welches mittels Stützzylindern die Bodenstützen ausfährt.

Gattungsgemäße Hydrauliksysteme, die für diesen Zweck vorgesehen sind, verfügen meist über eine Hydraulikpumpe, die in der Lage ist, alle Bodenstützen gleichzeitig auszufahren. Das gleichzeitige Ausfahren aller Bodenstützen durch gleichzeitige Druckbeaufschlagung der Stützzylinder mit einer Hydraulikflüssigkeit führt jedoch je nach Untergrund und Fahrzeug oder Container nicht zu einem gleichmäßigen Ausfahren, da die Hydraulikflüssigkeit in höherem Maße jene Stützen ausfährt, auf denen die geringe Last liegt. Insbesondere bei stark uneinheitlicher Lastverteilung, wie sie beispielsweise durch den Motorblock eines Fahrzeugs bedingt sein kann, führt die gemeinsame Druckbeaufschlagung der Stützzylinder zu einem asymmetrischen Anheben des Fahrzeugs. Zwar können durch das Schließen von Ventilen üblicherweise auch einzelne Stützzylinder mit Hydraulikflüssigkeit druckbeaufschlagt werden. Ein sequentielles Ausfahren der Stützzylinder kann jedoch zu hohen strukturellen Belastungen des Fahrzeugs führen.

Es ist auch bereits bekannt, separate Hydrauliksysteme für die einzelnen Bodenstützen vorzusehen, so dass diese gleichzeitig, jedoch individuell, gesteuert werden können. Die Mehrzahl an Hydrauliksystemen führt jedoch zu hohen Kosten und auch zu großem Raumbedarf.

Aus der CN 203161689 U ist ein Hydrauliksystem bekannt, welches über Stützen verfügt, die mittels zweier Pumpen betrieben werden können. Vorgesehen ist neben einer Hauptpumpe eine manuelle Pumpe, die nach Öffnen eines Ventils mit den Stützzylindern verbunden ist und dafür vorgesehen ist, bei Ausfall der Hauptpumpt einen Betrieb des Hydrauliksystems zu gewährleisten.

Weitere Dokumente, die Hydrauliksysteme beschreiben, sind die Dokumente FR 1284067 A, GB 1452249 A, US 5,915,700 und US 2011/0024706 A1.

### AUFGABE UND LÖSUNG

Aufgabe der Erfindung ist es, ein Hydrauliksystem sowie ein Fahrzeug oder einen Container sowie ein Betriebsverfahren zu dessen Nutzung bereitzustellen, welches ein schnelles und präzises Ausfahren des Stützsystems gestattet und das in vorteilhaft geringer Baugröße gebaut werden kann.

Erfindungsgemäß wird hierfür ein Hydrauliksystem zur Abstützung des Fahrzeugs oder des Containers auf einem Untergrund vorgeschlagen, welches mindestens zwei Stützzylinder zum Ausfahren von Bodenstützen und deren Wiedereinfahren aufweist. Vorzugsweise handelt es sich allerdings um drei oder vier Stützzylinder für drei oder vier Bodenstützen. Insbesondere bei Caravan-Anhängern ist auch eine Bauweise mit sechs Stützzylindern und sechs Bodenstützen zweckmäßig.

Erfindungsgemäß wird weiterhin ein Fahrzeug oder ein Container vorgeschlagen mit mindestens zwei, vorzugsweise aber drei oder vier ausfahrbaren Bodenstützen. Ein erfindungsgemäßes Fahrzeug kann insbesondere als Caravan-Anhänger oder als Wohnmobil ausgestaltet sein. Es kann sich aber auch um ein Nutzfahrzeug handeln. Erfindungsgemäße Container können als Frachtcontainer oder anderweitige Nutzcontainer ausgestaltet sein. Insbesondere jedoch kann es sich um einen Wohncontainer handeln, der üblicherweise mittels eines Pickup-Fahrzeugs oder eines Lastkraftwagens bewegt wird. Insbesondere vorzugsweise sind an einem Heck des Fahrzeugs oder Containers zwei Bodenstützen mit jeweils mindestens einem Stützzylinder vorgesehen, während an der Front des Fahrzeugs vorzugweise entweder eine Bodenstütze oder zwei Bodenstützen mit jeweils mindestens einem Stützzylinder vorgesehen sind.

Das Hydrauliksystem weist mindestens zwei Hydraulikpumpen auf, die an jeweils eine Hydraulikhauptleitung angeschlossen sind, wobei jeder der mindestens zwei Hydraulikpumpen ein Elektromotor zugeordnet ist. Mindestens ein Stützzylinder ist einer ersten der Hydraulikhauptleitungen zugeordnet, so dass er von der an diese Hydraulikhauptleitungen angeschlossenen Hydraulikpumpe direkt gespeist werden kann. Mindestens ein weiterer Stützzylinder ist der anderen Hydraulikhauptleitungen zugeordnet, so dass er von der anderen Hydraulikpumpe direkt gespeist werden kann.

Die beiden Hydraulikhauptleitungen können miteinander verbunden werden, so dass die Hydraulikpumpen auch den jeweils anderen Stützzylinder gleichsam indirekt speisen können. Diese Verbindung kann jedoch von einer elektronischen Hydrauliksteuerung unterbrochen werden. Zu diesem Zweck weist das Hydrauliksystem ein schaltbares Hauptventil auf, über das die beiden Hydraulikhauptleitungen miteinander verbunden oder voneinander getrennt werden können. Ist das Hauptventil geöffnet, speisen beide Hydraulikpumpen beide Hydraulikhauptleitungen. Ist das Hauptventil geschlossen, so speisen beide Hydraulikpumpen jeweils nur die ihnen jeweils zugeordnete Hydraulikhauptleitung.

Zusätzlich zum Hauptventil ist vorzugsweise auch jedem Stützzylinder ein jeweils eigenes Stützzylinderventilzugeordnet, mittels dessen der Stützzylinder individuell mit der ihm zugeordneten Hydraulikhauptleitung verbunden oder hiervon getrennt werden kann. Alternativ oder zusätzlich kann weiterhin vorgesehen sein, dass jedem weiteren Arbeitszylinder ein Steuerventil zugeordnet ist, mittels dessen der jeweilige Arbeitszylinder individuell mit der ihm zugeordneten Hydraulikhauptleitung verbunden oder hiervon getrennt werden kann.

Ein erfindungsgemäßes Hydrauliksystem könnte auch mehr als zwei Hydraulikpumpen und mehr als zwei Hydraulikhauptleitungen aufweisen, beispielsweise drei Hydraulikpumpen, die drei Hydraulikhauptleitungen speisen, welche durch zwei oder drei Hauptventile verbindbar und trennbar sind. Bevorzugt ist ein erfindungsgemäßes Hydrauliksystem jedoch mit genau zwei Hydraulikpumpen ausgestattet.

Die mindestens zwei Hydraulikpumpen können baulich separat ausgestaltet sein und gegebenenfalls sogar jeweils mit einem eigenen Tank für Hydraulikflüssigkeit ausgestattet sein. Bevorzugt ist allerdings die Verwendung eines gemeinsamen Tanks und/oder die bauliche Integration beider Pumpen in eine gemeinsame Pumpenbaugruppe, in die auch das Hauptventil integriert sein kann. Erfindungsgemäß vorgesehen ist eine Gestaltung mit zwei unabhängigen Elektromotoren, jeweils einem für jede der beiden Hydraulikpumpen.

Ein erfindungsgemäßes Hydrauliksystem gestattet zwei unterschiedliche Betriebsweisen, nämlich den Betrieb bei geöffnetem Hauptventil und den Betrieb bei geschlossenem Hauptventil.

Bei geöffnetem Hauptventil speisen beide Hydraulikpumpen gemeinsam beide Hydraulikhauptleitungen. Damit können alle Stützzylinder von jeder der beiden Hydraulikpumpen gespeist werden. Welcher der Stützzylinder tatsächlich gespeist wird, kann bei geöffnetem Hauptventil durch die genannten Stützzylinderventile gesteuert werden.

Bei geschlossenem Hauptventil speisen beide Pumpen nur jeweils eine Hydraulikhauptleitung und je nach Ventilstellung der Stützzylinderventile die an dieser Hydraulikhauptleitung angeschlossenen Stützzylinder.

Diese beiden Betriebsweisen gestatten verschiedene Verfahren und Möglichkeiten, wobei insbesondere die Möglichkeit von Vorteil ist, einen Stützzylinder in unterschiedlichen Phasen des Ausfahrens oder Einfahrens einerseits von beiden Hydraulikpumpen und andererseits von nur einer Hydraulikpumpe speisen zu lassen. Damit kann je nach Phase des Ausfahrens bzw. Einfahrens den jeweiligen Anforderungen der hohen Ausfahrgeschwindigkeit und der präzisen Zustellung entsprochen werden.

Es ist insbesondere ein Verfahren zum Ausfahren der Stützzylinder und damit der Bodenstützen vorgesehen, bei dem zunächst bei geöffnetem Hauptventil zumindest ein erster Stützzylinder der einen Hydraulikhauptleitung teilweise ausgefahren wird, während mindestens ein anderer Stützzylinder durch das Stützzylinderventil gesperrt ist und nicht ausgefahren wird. Vorzugsweise speisen beide Hydraulikpumpen in dieser Phase gemeinsam die vorzugsweise zwei Stützzylinder nur einer der Hydraulikhauptleitungen. Der Ausfahrvorgang erfolgt daher vergleichsweise schnell. Insbesondere wenn die erste Bodenstütze oder die ersten Bodenstützen den Boden erreicht haben und dies beispielsweise durch einen Erschütterungssensor oder einen Neigungssensor erfasst wurde, erfolgt ein Umschaltvorgang, so dass der mindestens eine erste Stützzylinder mittels seines Stützzylinderventils von den Hydraulikpumpen isoliert wird und das Stützzylinderventil des mindestens einen anderen Stützzylinders geöffnet wird. Anschließend wird der mindestens eine zweite Stützzylinder mittels der zwei Hydraulikpumpen ausgefahren, vorzugsweise wiederum bis ein Bodenkontakt der mindestens einen zweiten Bodenstütze erfasst wurde. Sobald somit alle Bodenstützen bis auf Bodenkontakt ausgefahren worden sind, wird das Hauptventil geschlossen. Nun können die beiden Stützzylinder jeweils nur noch von der ihrer Hydraulikhauptleitung zugeordneten Hydraulikpumpe gespeist werden. Dies geschieht vorzugsweise gleichzeitig, so dass in einer sich anschließenden Phase die mindestens zwei Stützzylinder gleichzeitig und gespeist von jeweils einer Hydraulikpumpe ausgefahren werden. In dieser Phase kann durch die individuelle Ansteuerung der beiden Pumpen ein gleichmäßiges Ausfahren erzielt werden, unabhängig von der Differenz der auf die Bodenstützen und die Stützzylindern wirkenden Last.

Die erfindungsgemäße Struktur des Hydrauliksystems weist noch weitere Vorteile auf. So kann beispielsweise bei Defekt einer Hydraulikpumpe die verbleibende Hydraulikpumpe einen Notbetrieb aufrechterhalten, indem das Hauptventil dauerhaft geöffnet bleibt.

Auch kann ein erfindungsgemäßes Hydrauliksystem flexibler auf Anforderungen zum gerade erforderlichen Förderstrom reagieren. Während bei Systemen mit nur einer Hydraulikpumpe diese üblicherweise einen Förderstrom zwischen einer konstruktiv bedingten Minimalmenge und einer konstruktiv bedingten Maximalmenge fördern können, ist ein System mit zwei Hydraulikpumpen flexibler, denn durch Deaktivierung einer der Hydraulikpumpen kann der Hydraulikstrom halbiert werden.

Insbesondere wenn die Stützzylinder oder andere Arbeitszylinder auch sehr langsam betrieben und/oder präzise zugestellt werden können sollen, ist ein erfindungsgemäßes System mit zwei Hydraulikpumpen von Vorteil, denn diese können für geringe Volumenströme ausgebildet sein und durch das Zusammenschalten beider Hydraulikpumpen dennoch im Bedarfsfalle gemeinsam einen hohen Volumenstrom bieten.

Bei dem mindestens einen Stützzylinder der ersten Hydraulikhauptleitung handelt es sich vorzugsweise um einen Front-Stützzylinderzum Ausfahren einerfrontseitigen Bodenstütze, während es sich bei dem mindestens einen Stützzylinder der zweiten Hydraulikhauptleitung um einen Heck-Stützzylinder zum Ausfahren heckseitiger Bodenstützen handelt. Eine der Hydraulikhauptleitungen ist somit der Frontseite des Fahrzeugs oder des Containers zugeordnet, während die andere Hydraulikhauptleitungen der Heckseite zugeordnet ist. Dies ist zweckmäßig, da eine uneinheitliche Lastverteilung bei Fahrzeugen und Containern meist insbesondere entlang ihrer Hauptrichtung bzw. Fahrrichtung gegeben ist, insbesondere durch frontseitige oder heckseitige Anordnung des Motors oder anderer technischen Aggregate.

Eine alternative Zuordnung ist bevorzugt, wenn sechs Stützzylinder vorgesehen sind, die in drei Paaren, die in Fahrzeuglängsrichtung zueinander versetzt sind, angeordnet sind. Eine solche Gestaltung ist bei Caravan-Anhängern von Vorteil. Das mittlere Stützzylinderpaar ist dabei meist im Bereich der Achsen angeordnet, während die anderen zwei Paar Stützzylinder am vorderen bzw. hinteren Ende des Fahrzeugs vorgesehen sind. Bei einer solchen Gestaltung wird es als vorteilhaft angesehen, wenn das mittlere Stützzylinderpaareinerder Hydraulikhauptleitungen zugeordnet ist, während die anderen vier Stützzylinder der anderen Hydraulikhauptleitung zugeordnet sind.

Bei einer bevorzugten Gestaltung des Hydrauliksystems ist weiterhin vorgesehen, dass das Hydrauliksystem zwischen der zugeordneten Hydraulikpumpe und einem Steuerventil oder einem Stützzylinderventil ein Rückschlagventil aufweist, wobei ein derartiges Rückschlagventil bei einzelnen oder einigen Stützzylindern oder Arbeitszylindern oder aber bei allen Zylindern vorgesehen sein kann.

Das Rückschlagventil bewirkt, dass bei geöffnetem Steuerventil bzw. Stützzylinderventil Hydraulikflüssigkeit nicht zurück in den Hydrauliktank strömen kann. Nur bei geschlossenem Steuerventil oder Stützzylinderventil ist dies durch einen entsprechenden Abfluss am Ventil möglich. Somit kann durch Öffnen des Steuerventils bzw. Stützzylinderventils der betreffende Zylinder gegen eine einfahrende Bewegung gesperrt werden, beispielsweise um gezielt nur einige Zylinder einzufahren.

Ganz besonders von Vorteil ist dies, wenn das Hydrauliksystem zwei getrennte Rückleitungen aufweist, die jeweils mindestens eine in Einfahrrichtung wirkende Druckkammer mindestens eines Stützzylinders oder mindestens eines Arbeitszylinders mit jeweils einer der Hydraulikpumpen verbinden. Damit gestatten es die beiden Hydraulikpumpen, zwei Zylinder, die an unterschiedlichen Rückleitungen vorgesehen sind, synchronisiert einzufahren, indem die beiden Hydraulikpumpen mit identischem Volumenstrom die beiden Zylinder antreiben.

Dabei kann zusätzlich vorgesehen sein, dass das Hydrauliksystem ein zweites Hauptventil aufweist, über das die beiden Rückleitungen mittels eine elektrischen Schaltsignals miteinander verbunden oder voneinander getrennt werden können. Entsprechend den bereits beschriebenen Hydraulikhauptleitungen, die zum Zwecke der ausfahrenden Bewegung an den Zylindern druckbeaufschlagt werden und hierzu mittels des ersten Hauptventils fallweise verbunden und fallweise getrennt werden können, können durch das zweite Hauptventil die Rückleitungen verbunden und getrennt werden, um bei einer einfahrenden Bewegung an den Zylindern gezielt zu steuern, welche Hydraulikpumpe welchen Zylinder einfahrend antreibt.

Das Hydrauliksystem ist erfindungsgemäß primär für das Ausfahren und Einfahren der Stützzylinder des Containers oder Fahrzeugs vorgesehen. Es kann jedoch auch für weitere Funktionen des Fahrzeugs oder Containers verwendet werden. Bei einer solchen Gestaltung weist das Hydrauliksystem mindestens einen Hydraulikmotor oder einen weiteren Arbeitszylinder auf.

Dieser weitere Arbeitszylinder oder Hydraulikmotor oder vorzugsweise zwei Arbeitszylinder oder zwei Hydraulikmotoren können insbesondere für eine der folgenden Funktionen vorgesehen sein:
Eine mögliche Funktion besteht darin, hiermit einen Ausfahrkasten des Fahrzeugs oder Containers steuern zu können, mittels dessen ein Innenraum des Fahrzeugs flexibel vergrößerbar ist. Ein solcher Ausfahrkasten ist vertikal oder horizontal ausfahrbar, vorzugsweise jedoch horizontal. Er kann insbesondere auch Fußbodenfläche des Innenraums vergrößern. Im Falle eines Wohnmobils oder eines Caravan-Anhängers kann der Ausfahrkasten beispielsweise eine Küchenzeile oder eine Schlafmöglichkeit zur Verfügung stellen.

Eine weitere Funktion, die durch einen oder mehrere zusätzliche Arbeitszylinder oder Hydraulikmotoren geleistet werden kann, ist die Steuerung eines Schließelements eines Stauraums oder eines Innenraums oder einer Hubplattform. Das Schließelement kann insbesondere eine schwenkbare Klappe sein. Auch eine kombiniert schwenkbare und hubbewegliche Klappe ist möglich.

Insbesondere bei einem Wohnmobil, einem Wohncontainer oder einem Caravan-Anhänger kann die zusätzliche Funktion, die das Hydrauliksystem leistet, die Steuerung eines Einstiegssystems sein, insbesondere einer ausfahrbaren Stufe oder eines ausfahrbaren Treppensystems, welches im Bereich einer Zugangstür des Fahrzeugs oder des Containers vorgesehen ist.

Eine weitere denkbare Funktion, die vorzugsweise durch zwei Hydraulikmotoren des Hydrauliksystems realisiert sein kann, ist die eines Bewegungssystems, mittels dessen das Fahrzeug manövriert werden kann. Bei einem solchen Bewegungssystem ist vorzugsweise auf der linken und der rechten Fahrzeugseite jeweils ein Hydraulikmotor vorgesehen, der mindestens ein rechtes und ein linkes Rad antreibt.

Auch sind Fahrzeuge und Container von der Erfindung umfasst, die zusätzliche Arbeitszylinder und/oder Hydraulikmotoren für eine Mehrzahl der genannten Funktionen bieten. So kann beispielsweise ein Caravan neben den Bodenstützen auch ein Bewegungssystem, ein Einstiegssystem sowie Ausfahrkasten zur Vergrößerung des Innenraums aufweisen, die alle mittels des einen Hydrauliksystems angetrieben werden.

Je nach Art der Zusatzfunktion sind vorzugsweise zwei oder mehr zusätzliche Arbeitszylinder oder zwei oder mehr Hydraulikmotoren vorgesehen. Diese können beidseitig des zu bewegenden Elements vorgesehen sein, beispielsweise beidseitig links und rechts an einem Ausfahrkasten. In einem solchen Fall wird es als bevorzugt angesehen, wenn die zwei Hydraulikmotoren oder die zwei weiteren Arbeitszylinder an unterschiedlichen Hydraulikhauptleitungen vorgesehen sind. Hierdurch kann der Vorteil der zwei Hydraulikpumpen in Hinblick auf das fallweise Zusammenwirken und fallweise Einzelwirken bei asymmetrischer Last auch bei den genannten Zusatzfunktionen genutzt werden.

Die Hydraulikpumpen sind vorzugsweise dafür vorgesehen, sowohl das Ausfahren als auch das Einfahren der Stützzylinder oder auch der Arbeitszylinder bewirken zu können. Vorzugsweise ist vorgesehen, dass die Hydraulikpumpen durch Drehrichtungsumkehr in der Lage sind, die Stützzylinder oder Arbeitszylinder in entgegengesetzter Richtung bewegen zu können. Bei einer bevorzugten Gestaltung kann vorgesehen sein, dass das Hydrauliksystem eine Ablauf-Druckwaage aufweist, mittels derer ein synchroner Ablauf oder ein synchroner Zulauf in eine in Einfahrrichtung der Zylinder wirkende Druckkammer der Zylinder gewährleistet werden kann.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 bis 4 zeigen verschiedene Fahrzeuge sowie einen Container, die jeweils mit einem hydraulischen Stützsystem und teilweise mit weiteren hydraulisch angetriebenen Komponenten ausgestattet sind.
Fig. 5 zeigt in schematischer Darstellung ein Hydrauliksystem zum Antreiben des hydraulischen Stützsystems sowie der weiteren hydraulisch angetriebenen Komponenten.
Fig. 6A bis 11 zeigen einen exemplarischen Ablauf betreffend die Nutzung des Hydrauliksystems am Beispiel eines Wohnmobils.
Fig. 12 zeigt in schematischer Darstellung eine alternative Ausgestaltung eines Hydrauliksystem.

### DETAILLIERTE BESCHREIBUNG DER AUSFÜHRUNGSBEISPIELE

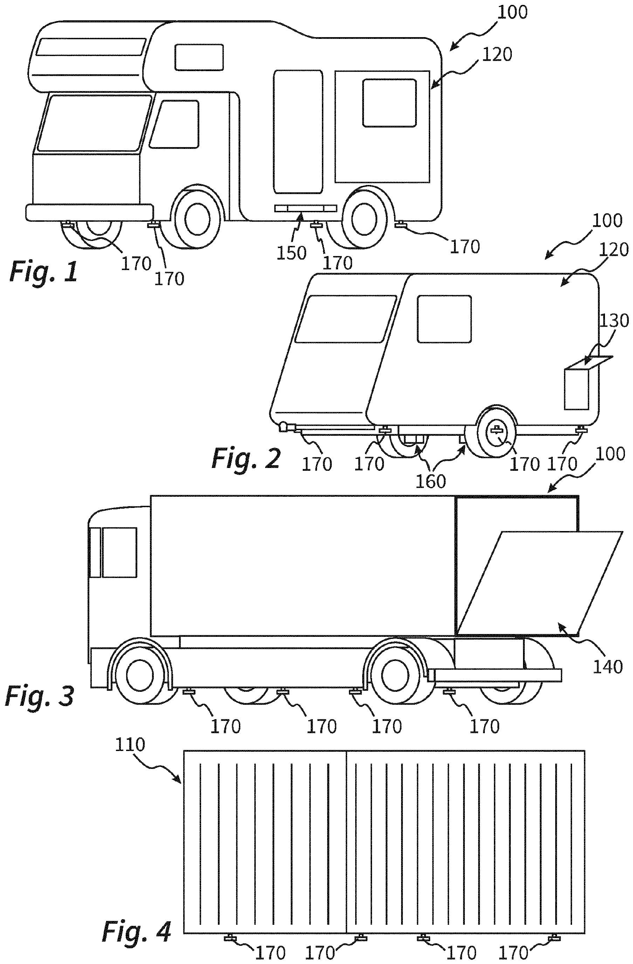

Die Fig. 1 bis 3 zeigen verschiedene erfindungsgemäße Fahrzeuge 100, die jeweils mit einem erfindungsgemäßen Hydrauliksystem 10 ausgestattet sind. Fig. 4 zeigt einen Container 110 mit einem solchen Hydrauliksystem 10, wobei ein solcher Container üblicherweise mittels eines LKW oder eines Pick-up-Fahrzeugs zwischen verschiedenen Standorten bewegt wird.

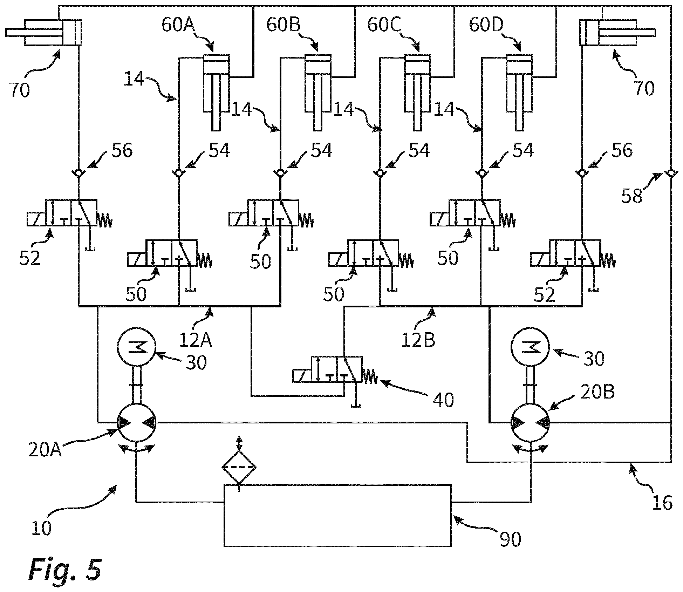

Alle Fahrzeuge 100 sowie der Container 110 weisen ein Stützsystem mit jeweils insgesamt vier Bodenstützen 170 auf, die im stationären Betrieb des Fahrzeugs bzw. am Aufstellungsort des Containers 110 vertikal ausgefahren werden, um die Gewichtskraft des Fahrzeugs und seiner Ladung stabil auf einem Untergrund abstützen zu können. Jeder dieser Bodenstützen ist ein Stützzylinder 60A bis 60D zugeordnet, wie in Fig. 5 dargestellt. Die hier gewählte Darstellung von vertikal ausfahrbaren Bodenstützen 170 ist nur als Beispiel zu verstehen. Die Bodenstützen könnten ebenso auch als schwenkbewegliche Bodenstützen oder an horizontal ausfahrbaren Bodenstützenträgern vorgesehen sein.

Neben den Bodenstützen 170 verfügen die Fahrzeuge 100 der Fig. 1 bis 3 noch über verschiedene weitere hydraulisch betriebene Funktionalitäten. Die Zuordnung zu den verschiedenen Fahrzeugen bzw. dem Container ist dabei nur als Beispiel zu verstehen. Alle genannten Funktionalitäten können bei allen Einheiten der Fig. 1 bis 4Verwendungfinden.

Exemplarisch sind am Wohnmobil 100 der Fig. 1 als zusätzliche hydraulische Funktionen eine hydraulisch ausfahrbare Stufe 150 sowie ein Ausfahrkasten 120 vorgesehen, der durch zwei beidseitig des Ausfahrkastens 120 vorgesehene Arbeitszylinder 70 ausfahrbar und einfahrbar ist Beim Caravan-Anhänger 100 der Fig. 2 ist ein hydraulisch aufklappbares Klappenelement 130 dargestellt, mittels dessen ein Stauraum verschließbar ist.

Bei dem Lastkraftwagen 100 der Fig. 3 ist eine heckseitige aufschwenkbare und hubbewegliche Ladeklappe 140 vorgesehen.

Ein erfindungsgemäßes Hydrauliksystem ist zumindest dafür ausgebildet, die Stützzylinder 60A bis 60D der Bodenstützen 170 zu betätigen. Vorzugsweise ist ein solches System jedoch zum Betrieb aller genannten hydraulischen Komponenten ausgebildet.

Fig. 5 zeigt ein derartiges Hydrauliksystem 10 in einer schematischen Darstellung.

Mündend in die bereits genannten vier Stützzylindern 60A, 60B, 60C, 60D, von denen zwei Stützzylinder 60A, 60B Front-Stützzylinder sind und zwei Stützzylinder 60C, 60D Heck-Stützzylinder sind, erstrecken sich Zuleitungen 14 zu elektrisch schaltbaren Stützzylinderventilen 50, die den Zufluss von Hydraulikflüssigkeit in jeweils eine der Druckkammern der Stützzylinder 60A, 60B, 60C, 60D steuern. Zwischen den Stützzylinderventilen 50 und den Stützzylindern 60A, 60B, 60C, 60D sind Rückschlagventile 54 vorgesehen, die bis zu einem Grenzdruck einen Rückfluss von Hydraulikflüssigkeit aus den Stützzylindern 60 zurück in Richtung der Stützzylinderventile 50 verhindern. Bei Druckbeaufschlagung der Rückleitung 16 zum Zwecke des Einfahrens der Stützzylinder 60A, 60B, 60C, 60D öffnen die Rückschlagventile 54 jedoch.

Die insgesamt vier Stützzylinderventile 50 sind an zwei unterschiedlichen Hydraulikhauptleitungen 12A, 12B angeschlossen, nämlich die Stützzylinderventile 50 der Front-Stützzylinder 60A, 60B an der Hydraulikhauptleitung 12A und die Stützzylinderventile 50 der Stützzylinder 60C, 60D an der zweiten Hydraulikhauptleitung 12B. An beiden Hydraulikhauptleitungen 12A, 12B ist jeweils eine mittels eines Elektromotors 30 betriebene Hydraulikpumpe 20A, 20B zugeordnet. In Abhängigkeit der Drehrichtung dieser Hydraulikpumpen 20A, 20B pumpen diese Hydraulikflüssigkeit, insbesondere aus dem Hydraulikflüssigkeitstank 90, in ihre jeweilige Hydraulikhauptleitung 12A, 12B oder in die ebenfalls mit einem bei einem Grenzdruck öffnenden Rückschlagventil 58 versehene Rückleitung 16. Die Hydraulikpumpen 20A, 20B sind so ausgestaltet, dass bei einer ersten Drehrichtung und somit bei Förderung von Hydraulikflüssigkeit in die jeweilige Hydraulikhauptleitung 12A, 12B gleichzeitig aus in den Rückleitungen 16 in den Hydraulikflüssigkeitstank 90 zurückfließen kann. Bei umgekehrter Drehrichtung und einer Förderung in die Rückleitungen 16 hinein kann Hydraulikflüssigkeit aus den Hydraulikhauptleitungen 12A, 12B in den Hydraulikflüssigkeitstank 90 zurückfließen.

Die beiden Hydraulikhauptleitungen 12A, 12B können mittelseinesschaltbaren Hauptventils40zwischen einem verbundenen und einem getrennten Zustand umgeschaltet werden. Ist das Hauptventil 40 geschlossen, so dass die Hydraulikhauptleitungen 12A, 12B getrennt voneinander sind, so können die beiden Pumpen 20A, 20B lediglich hydraulische Verbraucher an ihrer jeweiligen Hydraulikhauptleitung 12A, 12B speisen. Ist das Hauptventil 40 geöffnet, so können die beiden Pumpen 20A, 20B gemeinsam oder einzeln jeweils alle hydraulischen Verbraucher an beiden Hydraulikhauptleitungen 12A, 12B speisen.

Zusätzlich zu den genannten Stützzylindern 60A bis 60D sind in der exemplarischen Darstellung der Fig. 5 noch zwei weitere Hydraulikzylinder 70 vorgesehen. Es handelt sich um Arbeitszylinder 70 einer oder mehrerer der genannten hydraulischen Zusatzfunktionen des Fahrzeugs. Insbesondere können beide Arbeitszylinder 70 der gleichen Zusatzfunktion zugeordnet sein, beispielsweise links- und rechtsseitige Arbeitszylinder des Ausfahrkastens 120 darstellen. Die beiden Arbeitszylinder 70 sind an unterschiedlichen Hydraulikhauptleitungen 12A, 12B angeschlossen. Beiden ist jeweils ein Steuerventil 52 sowie ein Rückschlagventil56 zugeordnet, welches einen Rückstrom in Richtung der Steuerventile 52 nur bei einem Druck oberhalb eines definierten Grenzdrucks ermöglicht.

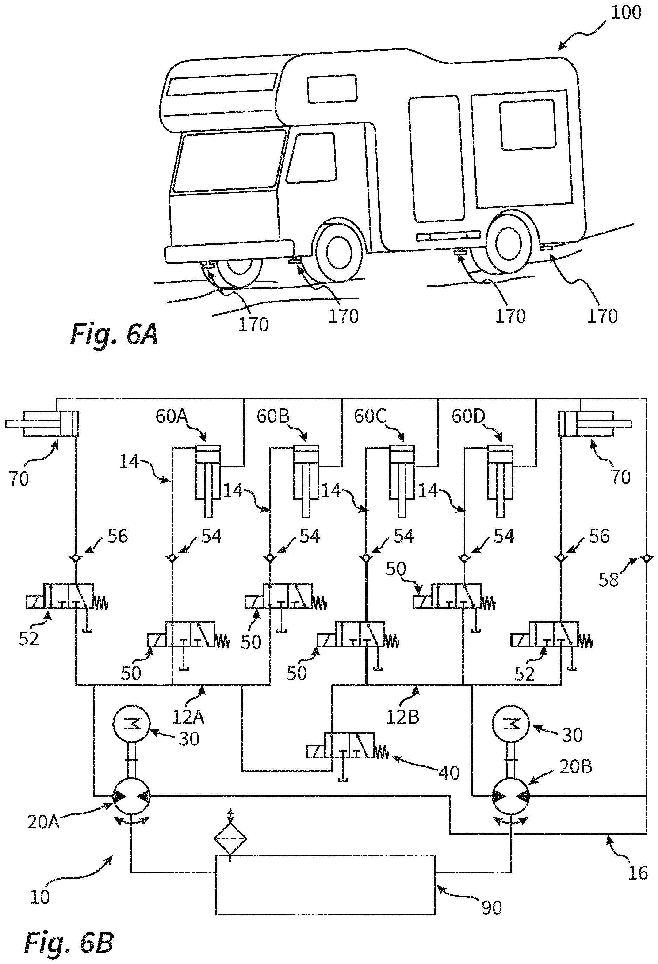

Die Nutzung des Hydrauliksystems 10 der Fig. 5 wird anhand der Fig. 6A bis 11 erläutert.

Fig. 6 zeigt ein Wohnmobil, das auf abschüssigem Gelände an seiner bestimmungsgemäßen Zielposition steht und hier bestimmungsgemäß abgestützt werden soll.

Zum Ausfahren der vier Bodenstützen 170 wird das Hydrauliksystem 10 in der in Fig. 6B dargestellten Weise zunächst derart eingestellt, dass das Hauptventil 40 geöffnet ist, während nur zwei Stützzylinderventile 50 ebenfalls geöffnet sind, nämlich die Stützzylinderventile 50 der frontseitigen Stützzylinder 60A, 60B. In diesem Zustand werden beide Hydraulikpumpen 20A, 20B derart betrieben, dass sie Hydraulikflüssigkeit in die miteinander verbundenen Hydraulikhauptleitungen 12A, 12Bfördern. Durch die in die Druckkammern einströmende Hydraulikflüssigkeit werden die beiden Stützzylinder 60A, 60B ausgefahren, während die Hydraulikflüssigkeit der jeweils gegenüberliegenden Druckkammern durch die Rückleitung 16 und in den Hydraulikflüssigkeitstank 90 abgeführt wird. In dieser Phase öffnet das Rückschlagventil 58 unter dem Druck der von den Stützzylindern kommenden Hydraulikflüssigkeit, der oberhalb eines diesbezüglichen Grenzdrucks des Rückschlagventils 58 liegt. Dadurch, dass beide Pumpen 20A, 20B gemeinsam nur zwei Bodenstützen 170 ausfahren, erfolgt dies mit hoher Geschwindigkeit. Die Bewegung endet zunächst, sobald die frontseitigen Bodenstützen 170 in Bodenkontakt gelangen. Dies wird durch einen Sensor erfasst.

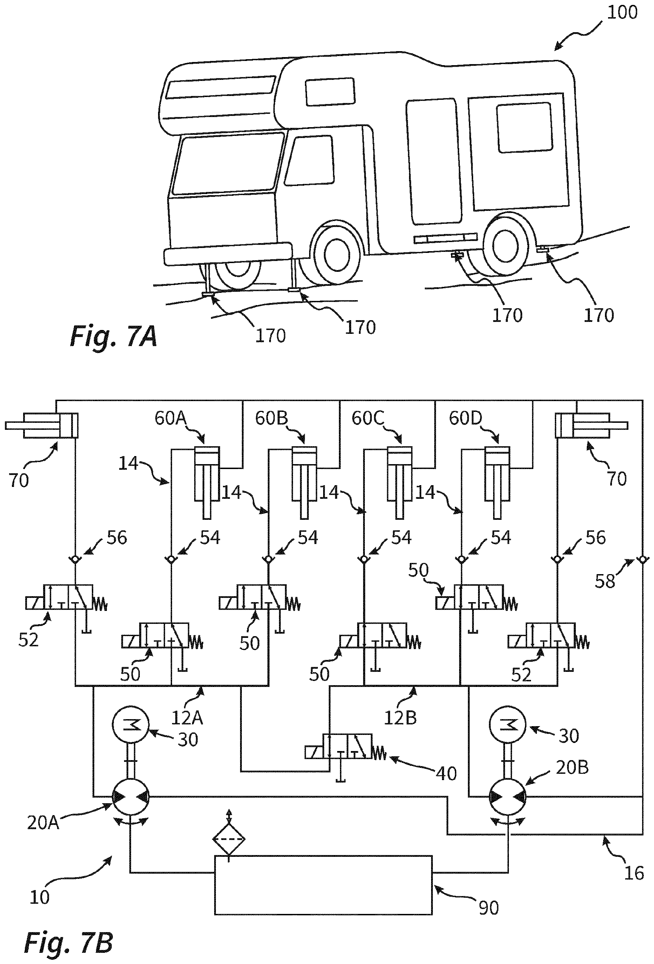

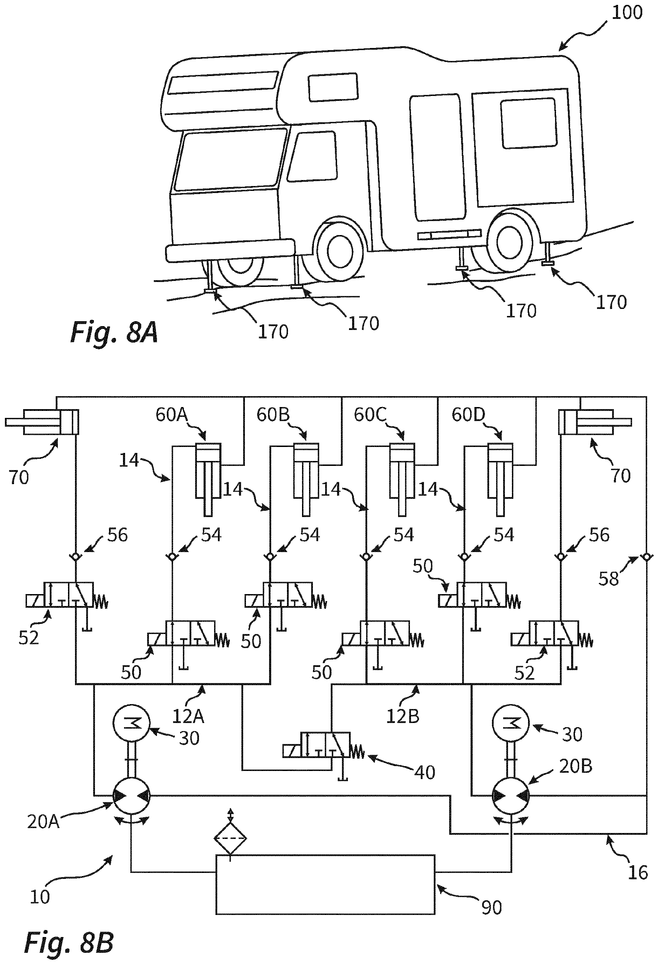

In Reaktion hierauf ändert sich die Ventilstellung des Hydrauliksystems 10. In der in Fig. 7B verdeutlichten Weise werden nun die Stützzylinderventile 50 der Stützzylinder 60A, 60B geschlossen, während die Stützzylinderventile 50 der heckseitigen Stützzylinder 60C, 60D geöffnet werden. Wiederum gespeist durch beide Hydraulikpumpen 20A, 20B werden nun die heckseitigen Bodenstützen 170 ausgefahren, bis der Zustand der Fig. 8A erzielt wurde, also alle Bodenstützen Bodenkontakt erreicht haben.

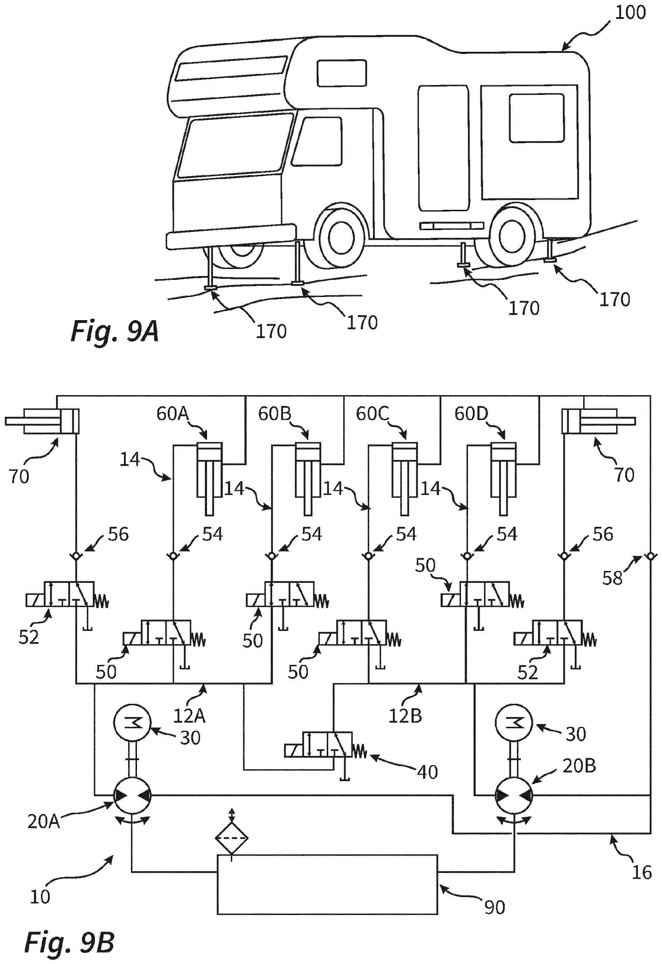

Nun wird das Hauptventil 40 geschlossen, so dass jede der beiden Hydraulikpumpen 20A, 20B nur noch die Stützzylinder 60A, 60B bzw. 60C, 60D der jeweils eigenen Hydraulikhauptleitung 12A, 12B speisen kann. Dann werden alle Stützzylinderventile 50 geöffnet und die beiden Pumpen 20A, 20B können bei jeweils individuell angepasstem Volumenstrom und/oder Druck gezielt die ihnen direkt zugeordneten Stützzylinder 60A, 60B, 60C, 60D ausfahren, bis der in Fig. 9A dargestellte angehobene und ausgerichtete Zustand des Fahrzeugs 100 erreicht ist. Da das Fahrzeug hierbei sehr gleichmäßig kraftbeaufschlagt und angehoben wird, ist die strukturelle Belastung gering.

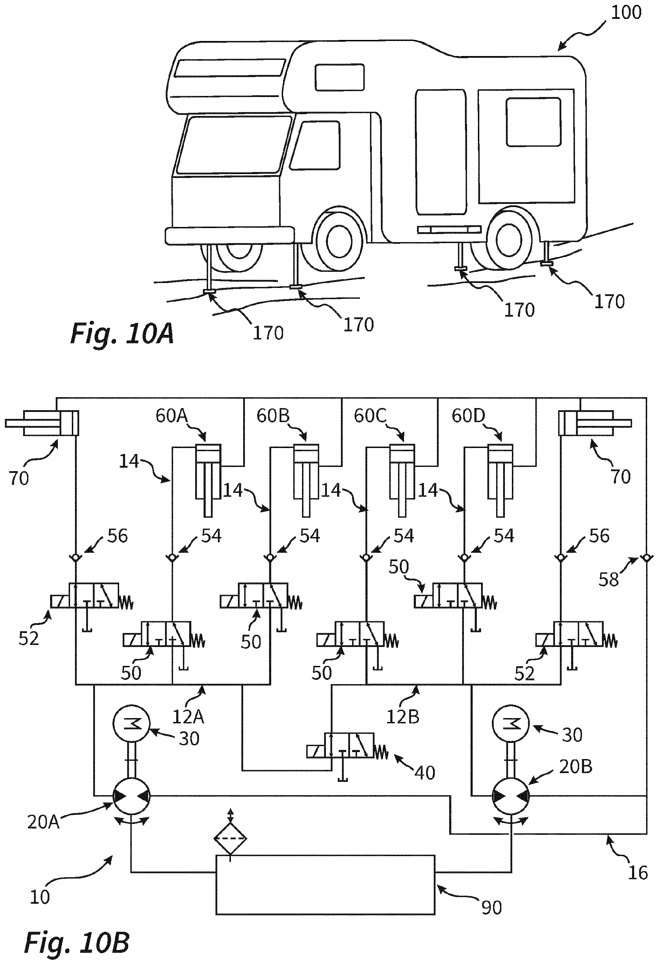

Das Fahrzeug 100 ist nun bezogen auf die Fahrzeuglängsrichtung horizontal ausgerichtet, stehtjedoch bezogen auf die Fahrzeugquerrichtung noch nicht horizontal. Es werden daher nun in der in Fig. 9B verdeutlichten Weise bei immer noch geschlossenem Hauptventil 40 die Stützzylinderventile 50 der rechtsseitigen Stützzylinder 60B, 60D geöffnet. Die Hydraulikpumpen 20A, 20B können dadurch das Fahrzeug 100 auch in Querrichtung ausrichten, so dass der Zustand der Fig. 10A erzielt wird.

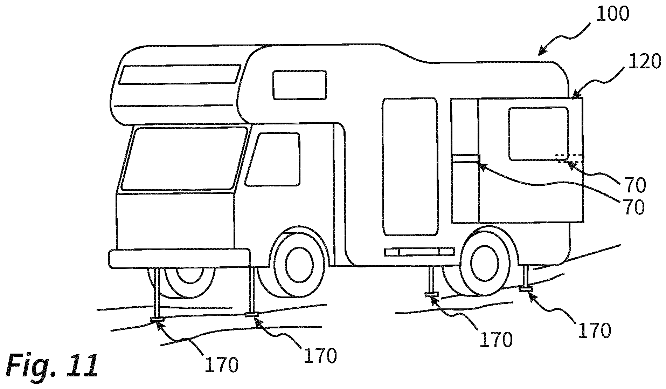

Abschließend wird in der in Fig. 10B verdeutlichten Weise das Hauptventil 40 wieder geöffnet und es werden alle Stützzylinderventile 50 geschlossen. Gleichzeitig werden jedoch die beiden Ventile 52 der Arbeitszylinder 70 geöffnet, so dass nun die beiden Hydraulikpumpen 20A, 20B gemeinsam die beiden Arbeitszylinder 70 ausfahren und hierdurch den Ausfahrkasten 120 in seine Nutzposition der Fig. 11 bringen. Alternativ könnte beim Ausfahren des Ausfahrkastens 120 auch das Hauptventil 40 geschlossen verbleiben. Der geöffnete Zustand gestattet es jedoch in vorteilhafter Weise, gegen Ende der Ausfahrbewegung durch Abschalten einer der Pumpen ein sehr langsames Anfahren der Endlage zu erzielen.

Soll das Wohnmobil wieder abgesenkt werden, so wird die Förderrichtung der Hydraulikpumpen 20A, 20B geändert, so dass diese gemeinsam in die Rückleitung 16 fördern. Hierdurch werden die Stützzylinder 60A, 60B, 60C, 60D sowie die Arbeitszylinder 70 eingefahren. Die beim Anheben in die Druckkammern der Stützzylinder 60A, 60B, 60C, 60D gepumpte Hydraulikflüssigkeit wird durch die aufgrund des ausreichend hohen Druck in der Rückleitung 16 in Richtung der Stützzylinderventile 50 gedrückt, wobei der Druck oberhalb des Grenzdrucks der Rückschlagventile 54 liegt und diese somit öffnet. An den geschlossenen Stützzylinderventilen 50 kann die Hydraulikflüssigkeit zurück in den Hydrauliktank fließen. Mittels einer nicht dargestellten Ablauf-Druckwaage kann ein gleichmäßiger Rückfluss und damit ein gleichmäßiges Einfahren der Bodenstützen realisierbar werden.

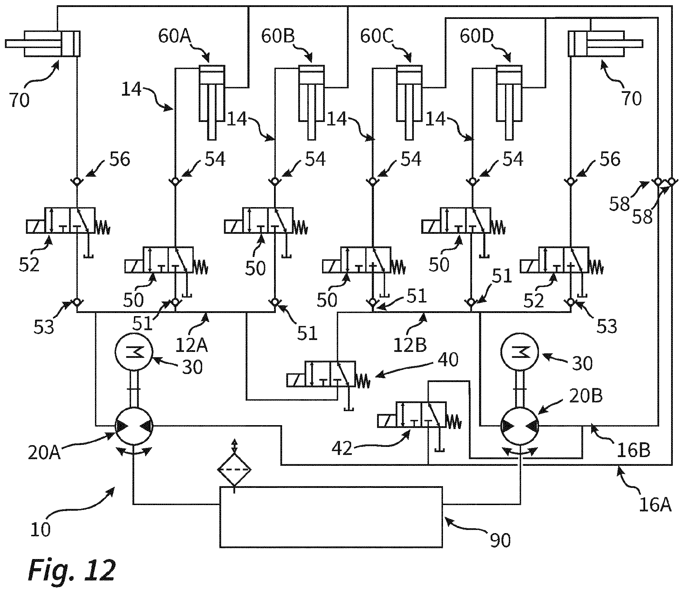

Fig. 12 zeigt eine alternative Gestaltung des Hydrauliksystems 10. Abweichend von der zuvor beschriebenen Gestaltung sind hier zwei Rückleitungen 16A, 16B vorgesehen, wobei die Rückleitung 16A an die in Einfahrrichtung wirkenden Druckkammern der Zylinder 60A, 60B, 70 der ersten Hydraulikhauptleitung 12A angeschlossen sind und wobei die Rückleitung 16B an die in Einfahrrichtung wirkenden Druckkammern der Zylinder 60C, 60D, 70 der zweiten Hydraulikhauptleitung 12B angeschlossen ist.

Die beiden Rückleitungen 16A, 16Bsind ähnlich den Hydraulikhauptleitungen 12A, 12B überein weiteres Hauptventil42 miteinander verbindbar und voneinander trennbar.

Weiterhin weist das Hydrauliksystem 10 der Fig. 12 zusätzlich zu den Komponenten der vorherigen Gestaltung Rückschlagventile 51, 53 auf, die zwischen den Hydraulikhauptleitungen 12A, 12B und den Stützzylinderventilen 50 bzw. Steuerventilen 52 vorgesehen sind. Sie bewirken, dass bei geöffnetem Stützzylinderventil 50 oder Steuerventil 52 keine Hydraulikflüssigkeit aus den Stützzylindern 60A, 60B, 60C, 60D oder den Arbeitszylindern 70 zurück in den Hydraulikflüssigkeitstank 90 gelangen kann.

Diese Bauweise ist insbesondere von Vorteil, da sie auch beim Einfahren der Stützzylinder 60A, 60B, 60C, 60D bzw. der Arbeitszylinder 70 eine differenzierte Ansteuerung gestatten.

Ist beim Einfahren der Stützzylinder 60A, 60B, 60C, 60D und der Arbeitszylinder 70 das Hauptventil 42 geöffnet und die Stützzylinderventile 50 und die Steuerventile 52 geschlossen, so ergibt sich das gleich Verhalten wie bei der Gestaltung des Hydrauliksystems gemäß Fig. 5. Der Flüssigkeitsstrom beider Hydraulikpumpen 20A, 20B beaufschlagt gleichzeitig alle Zylinder in Einfahrrichtung. Die in der jeweils anderen Druckkammer der Zylinder 60A, 60B, 60C, 60D, 70 vorhandene Hydraulikflüssigkeit wird in Richtung der Stützzylinderventile 50 und die Steuerventile 52 aus den Zylindern herausgedrückt und gelangt so direkt wieder in den Hydraulikflüssigkeitstank 90.

Sind jedoch einige der steuerbaren Ventile, beispielsweise alle vier Stützzylinderventile 50, geöffnet, so kann die Hydraulikflüssigkeit aus den Stützzylindern 60A, 60B, 60C, 60D zunächst nicht entweichen. Zwar könnte sie die bei ausreichendem Überdruck öffnenden Rückschlagventile 54 öffnen, nicht aber die Rückschlagventil 51. Die Stützzylinder 60A, 60B, 60C, 60D werden daher vorerst nicht eingefahren.

Stattdessen werden mit dem Förderdruck der Hydraulikpumpen 20A, 20B vorerst nur die Arbeitszylinder 70 eingefahren, sofern deren Steuerventil52 geschlossen sind und somit den Abfluss von Hydraulikflüssigkeit in den Hydraulikflüssigkeitstank 90 gestatten.

Das beschriebene zweite Hauptventil42 kann zusätzlich geschlossen werden, um die beiden Rückleitungen 16A, 16B voneinander zu trennen. Ist dies der Fall, so wird je ein Arbeitszylinder 70 von einer der Hydraulikpumpen 20A, 20B angetrieben. Wenn die Hydraulikpumpen 20A, 20B auf einen identischen Förderstrom eingestellt ist, wird hierdurch ein gleichmäßiges Einfahren erzwungen.

## Patentansprüche

1. Hydrauliksystem (10) für ein Fahrzeug (100) oder einen Container (110) zurAbstützungdes Fahrzeugs (100) oder des Containers (110) auf einem Untergrund (2) mit den folgenden Merkmalen:
a. das Hydrauliksystem (10) weist mindestens zwei Stützzylinder (60A, 60B, 60C, 60D) zum Ausfahren von Bodenstützen (170) auf, und
b. das Hydrauliksystem (10) weist mindestens zwei Hydraulikpumpen (20A, 20B) auf, die an jeweils eine Hydraulikhauptleitung (12A, 1 2B) angeschlossen sind, wobei jeder der mindestens zwei Hydraulikpumpen (20A, 20B) ein Elektromotor (30) zugeordnet ist, und
c. mindestens ein Stützzylinder (60A, 60B) ist einer ersten der Hydraulikhauptleitungen (12A) zugeordnet, und
d. mindestens ein Stützzylinder (60C, 60D) ist einer zweiten der Hydraulikhauptleitungen (12B) zugeordnet, und
e. das Hydrauliksystem (10) weist ein Hauptventil (40) auf, über das die beiden Hydraulikhauptleitungen (12A, 12B) miteinander verbunden oder voneinander getrennt werden können.

2. Hydrauliksystem (10) nach Anspruch 1 mit den folgenden weiteren Merkmalen:
a. bei dem mindestens einen Stützzylinder (60A, 60B) der ersten Hydraulikhauptleitung (12A) handelt es sich um einen Front-Stützzylinder (60A, 60B) zum Ausfahren einer frontseitigen Bodenstütze (170), und
b. bei dem mindestens einen Stützzylinder (60C, 60D) der zweiten Hydraulikhauptleitung (12B) handelt es sich um einen Heck-Stützzylinder (60C, 60D) zum Ausfahren heckseitiger Bodenstützen (170).

3. Hydrauliksystem (10) nach Anspruch 1 oder 2 mit dem folgenden weiteren Merkmal:
a. das Hydrauliksystem (10) weist mindestens einen Hydraulikmotor oder einen weiteren Arbeitszylinder (70) auf.

4. Hydrauliksystem (10) nach Anspruch 3 mit den folgenden weiteren Merkmalen:
a. das Hydrauliksystem (10) weist mindestens zwei Hydraulikmotoren oder zwei weitere Arbeitszylinder (70) auf, die zum Antrieb einer gemeinsamen Einheit oder eines gemeinsamen Systems vorgesehen sind, und
b. die zwei Hydraulikmotoren oder die zwei weiteren Arbeitszylinder sind an unterschiedlichen Hydraulikhauptleitungen vorgesehen.

5. Hydrauliksystem (10) nach einem der vorstehenden Ansprüche mit dem folgenden weiteren Merkmal:
a. jedem Stützzylinder (60A, 60B, 60C, 60D) ist ein Stützzylinderventil (50) zugeordnet, mittels dessen der Stützzylinder (60A, 60B, 60C, 60D) individuell mit der ihm zugeordneten Hydraulikhauptleitung (12A, 12B) verbunden oder hiervon getrennt werden kann.

6. Hydrauliksystem (10) nach einem der vorstehenden Ansprüche mit dem folgenden weiteren Merkmal:
a. das Hydrauliksystem (10) weist zwei getrennte Rückleitungen (16A, 16B) auf, die jeweils mindestens eine in Einfahrrichtung wirkende Druckkammer mindestens eines Stützzylinders (60A, 60B, 60C, 60D) oder mindestens eines Arbeitszylinders (70) mit jeweils einer der Hydraulikpumpen verbinden.

7. Hydrauliksystem (10) nach Anspruch 6 mit dem folgenden weiteren Merkmal:
b. das Hydrauliksystem (10) weist ein zweites Hauptventil (42) auf, über das die beiden Rückleitungen (16A, 16B) miteinander verbunden oder voneinander getrennt werden können.

8. Hydrauliksystem (10) nach einem der vorstehenden Ansprüche mit dem folgenden weiteren Merkmal:
a. es ist ein gemeinsamer Hydraulikflüssigkeitstank (90) zur Speisung der mindestens zwei Hydraulikpumpen (20A, 20B) vorgehen.

9. Fahrzeug (100) mit dem folgenden Merkmal:
a. das Fahrzeug (100) weist mindestens zwei ausfahrbare Bodenstützen (170) auf,
**gekennzeichnet durch** das folgende weitere Merkmal:
b. zum Ausfahren und Einfahren der Bodenstützen (170) ist ein Hydrauliksystem (10) nach einem der Ansprüche 1 bis 8 vorgesehen.

10. Fahrzeug (100) nach Anspruch 9 mit mindestens einem der folgenden zusätzlichen Merkmale:
a. das Fahrzeug (100) ist als Caravan-Anhänger ausgebildet, oder
b. das Fahrzeug (100) ist als Wohnmobil ausgebildet, oder
c. das Fahrzeug (100) ist als Nutzfahrzeug ausgebildet.

11. Fahrzeug (100) nach Anspruch 9 oder 10 mit den folgenden zusätzlichen Merkmalen:
a. das Fahrzeug (100) weist ein Bewegungssystem zur Bewegung des Fahrzeugs auf, und
b. das Bewegungssystem wird durch mindestens einen Hydraulikmotor oder mindestens einen Arbeitszylinder des Hydrauliksystems angetrieben.

12. Container (110) mit dem folgenden Merkmal:
a. der Container (110) weist mindestens zwei ausfahrbare Bodenstützen (170) auf,
**gekennzeichnet durch** das folgende weitere Merkmal:
b. zum Ausfahren und Einfahren der Bodenstützen (170) ist ein Hydrauliksystem (10) nach einem der Ansprüche 1 bis 8 vorgesehen.

13. Fahrzeug (100) oder Container (110) nach einem der Ansprüche 9 bis 12 mit dem folgenden weiteren Merkmal:
a. das Fahrzeug (100) oder der Container (110) weist einen Ausfahrkasten (120), ein Schließelement (130), eine Hubplattform oder ein Einstiegssystem (150) auf, welches mit einem Arbeitszylinder (70) des Hydrauliksystems (10) bewegbar ist.

14. Verfahren zum Betrieb eines Hydrauliksystems (10) nach Anspruch 1 bis 8 mit mindestens einem der folgenden Merkmale:
a. es wird bei geöffnetem Hauptventil (40) zunächst zumindest ein Stützzylinder (60A, 60B) der einen Hydraulikhauptleitung (12A) teilweise ausgefahren, und
b. anschließend wird bei geöffnetem Hauptventil (40) zumindest ein Stützzylinder (60C, 60D) der anderen Hydraulikhauptleitung (12B) teilweise ausgefahren, und
c. anschließend wird das Hauptventil (40) geschlossen, und
d. die Stützzylinder (60A, 60B, 60C, 60D) beider Hydraulikhauptleitungen (12A, 12B) werden gleichzeitig durch die jeweiligen Hydraulikpumpen (20A, 20B) weiter ausgefahren.

15. Verfahren zum Betrieb eines Hydrauliksystems (10) nach Anspruch 1 bis 8 und insbesondere nach Anspruch 14 mit mindestens einem der folgenden Merkmale:
a. während des Ausfahrens eines Stützzylinders (60A, 60B, 60C, 60D) wird dieser während einer Teilphase von beiden Hydraulikpumpen (20A, 20B) gespeist und während einer anderen Teilphase nurvon einer Hydraulikpumpe (20A, 20B) gespeist, und/oder
b. wenn ein Defekt einer der Hydraulikpumpen (20A, 20B) festgestellt wird, wird das Hauptventil (40) geöffnet, so dass die verbleibende funktionstaugliche Hydraulikpumpe (20A, 20B) alle Stützzylinder (60A, 60B, 60C, 60D) speisen kann, und/oder
c. das Verfahren sieht vor, dass situationsabhängig eine Anpassung einer Förderleistung der Hydraulikpumpen (20A, 20B) durch Änderung der Drehzahl der Hydraulikpumpen (20A, 20B) oder Deaktivieren einer der Hydraulikpumpen (20A, 20B) erfolgt.

## Claims

1. Hydraulic system (10) for a vehicle (100) or a container (110), for supporting the vehicle (100) or the container (110) on a ground surface (2), the hydraulic system having the following features:
a. the hydraulic system (10) has at least two support cylinders (60A, 60B, 60C, 60D) for extending ground supports (170), and
b. the hydraulic system (10) has at least two hydraulic pumps (20A, 20B) which are each connected to a respective main hydraulic line (12A, 12B), wherein each of the at least two hydraulic pumps (20A, 20B) is assigned an electric motor (30), and
c. at least one support cylinder (60A, 60B) is assigned to a first of the main hydraulic lines (12A), and
d. at least one support cylinder (60C, 60D) is assigned to a second of the main hydraulic lines (12B), and
e. the hydraulic system (10) has a main valve (40) via which the two main hydraulic lines (12A, 12B) can be connected to each other or separated from each other.

2. Hydraulic system (10) according to Claim 1, having the following further features:
a. the at least one support cylinder (60A, 60B) of the first main hydraulic line (12A) is a front support cylinder (60A, 60B) for extending a front ground support (170), and
b. the at least one support cylinder (60C, 60D) of the second main hydraulic line (12B) is a rear support cylinder (60C, 60D) for extending rear ground supports (170).

3. Hydraulic system (10) according to Claim 1 or 2, having the following further feature:
a. the hydraulic system (10) has at least one hydraulic motor or a further working cylinder (70).

4. Hydraulic system (10) according to Claim 3, having the following further features:
a. the hydraulic system (10) has at least two hydraulic motors or two further working cylinders (70) which are provided for driving a common unit or a common system, and
b. the two hydraulic motors or the two further working cylinders are provided on different main hydraulic lines.

5. Hydraulic system (10) according to one of the preceding claims, having the following further feature:
a. each support cylinder (60A, 60B, 60C, 60D) is assigned a support cylinder valve (50), by means of which the support cylinder (60A, 60B, 60C, 60D) can be individually connected to or separated from the main hydraulic main line (12A, 12B) assigned to it.

6. Hydraulic system (10) according to one of the preceding claims, having the following further feature:
a. the hydraulic system (10) has two separate return lines (16A, 16B), each of which connects at least one pressure chamber, acting in the retraction direction, of at least one support cylinder (60A, 60B, 60C, 60D) or of at least one working cylinder (70) to one of the hydraulic pumps.

7. Hydraulic system (10) according to Claim 6, having the following further feature:
b. the hydraulic system (10) has a second main valve (42), via which the two return lines (16A, 16B) can be connected to each other or separated from each other.

8. Hydraulic system (10) according to one of the preceding claims, having the following further feature:
a. a common hydraulic fluid tank (90) is provided to feed the at least two hydraulic pumps (20A, 20B).

9. Vehicle (100) having the following feature:
a. the vehicle (100) has at least two extensible ground supports (170),
**characterized by** the following further feature:
b. a hydraulic system (10) according to one of Claims 1 to 8 is provided for extending and retracting the ground supports (170).

10. Vehicle (100) according to Claim 9, having at least one of the following additional features:
a. the vehicle (100) is designed as a caravan trailer, or
b. the vehicle (100) is designed as a mobile home, or
c. the vehicle (100) is designed as a commercial vehicle.

11. Vehicle (100) according to Claim 9 or 10, having the following additional features:
a. the vehicle (100) has a movement system for moving the vehicle, and
b. the movement system is driven by at least one hydraulic motor or at least one working cylinder of the hydraulic system.

12. Container (110) having the following feature:
a. the container (110) has at least two extensible ground supports (170), **characterized by** the following further feature:
b. a hydraulic system (10) according to one of Claims 1 to 8 is provided for extending and retracting the ground supports (170).

13. Vehicle (100) or container (110) according to one of Claims 9 to 12, having the following further feature:
a. the vehicle (100) or the container (110) has an extension box (120), a closure element (130), a lifting platform or an entry system (150) which can be moved with a working cylinder (70) of the hydraulic system (10).

14. Method for operating a hydraulic system (10) according to Claims 1 to 8, having at least one of the following features:
a. when the main valve (40) is opened, at least one support cylinder (60A, 60B) of one main hydraulic line (12A) is first partially extended, and
b. then, with the main valve (40) opened, at least one support cylinder (60C, 60D) of the other main hydraulic line (12B) is partially extended, and
c. then the main valve (40) is closed, and
d. the support cylinders (60A, 60B, 60C, 60D) of both main hydraulic lines (12A, 12B) are further extended simultaneously by the respective hydraulic pumps (20A, 20B).

15. Method for operating a hydraulic system (10) according to Claims 1 to 8 and in particular according to Claim 14, having at least one of the following features:
a. during the extension of a support cylinder (60A, 60B, 60C, 60D), the latter is fed by both hydraulic pumps (20A, 20B) during a partial phase and only by one hydraulic pump (20A, 20B) during another partial phase, and/or
b. if a defect of one of the hydraulic pumps (20A, 20B) is detected, the main valve (40) is opened, so that the remaining functional hydraulic pump (20A, 20B) can feed all the support cylinders (60A, 60B, 60C, 60D), and/or
c. the method provides for the delivery capacity of the hydraulic pumps (20A, 20B) to be adjusted, depending on the situation, by changing the speed of the hydraulic pumps (20A, 20B) or by deactivating one of the hydraulic pumps (20A, 20B).

## Revendications

1. Système hydraulique (10) pour un véhicule (100) ou un conteneur (110) pour supporter le véhicule (100) ou le conteneur (110) sur un sol (2), avec les caractéristiques suivantes :
a. le système hydraulique (10) présente au moins deux vérins de support (60A, 60B, 60C, 60D) pour déployer des supports de plancher (170), et
b. le système hydraulique (10) présente au moins deux pompes hydrauliques (20A, 20B) qui sont raccordées chacune à une conduite hydraulique principale (12A, 12B), un moteur électrique (30) étant associé à chacune des au moins deux pompes hydrauliques (20A, 20B), et
c. au moins un vérin de support (60A, 60B) est associé à une première des conduites hydrauliques principales (12A), et
d. au moins un vérin de support (60C, 60D) est associé à une deuxième des conduites hydrauliques principales (12B), et
e. le système hydraulique (10) présente une soupape principale (40) par laquelle les deux conduites hydrauliques principales (12A, 12B) peuvent être reliées entre elles ou séparées l'une de l'autre.

2. Système hydraulique (10) selon la revendication 1, avec les caractéristiques supplémentaires suivantes :
a. l'au moins un vérin de support (60A, 60B) de la première conduite hydraulique principale (12A) consiste en un vérin de support avant (60A, 60B) pour déployer un support de plancher avant (170), et
b. l'au moins un vérin de support (60C, 60D) de la deuxième conduite hydraulique principale (12B) consiste en un vérin de support arrière (60C, 60D) pour déployer des supports de plancher arrière (170).

3. Système hydraulique (10) selon la revendication 1 ou 2, avec la caractéristique supplémentaire suivante :
a. le système hydraulique (10) présente au moins un moteur hydraulique ou un autre vérin de travail (70).

4. Système hydraulique (10) selon la revendication 3, avec les caractéristiques supplémentaires suivantes :
a. le système hydraulique (10) présente au moins deux moteurs hydrauliques ou deux autres vérins de travail (70) qui sont prévus pour entraîner une unité commune ou un système commun, et
b. les deux moteurs hydrauliques ou les deux autres vérins de travail sont prévus sur des conduites hydrauliques principales différentes.

5. Système hydraulique (10) selon l'une quelconque des revendications précédentes, présentant la caractéristique supplémentaire suivante :
a. à chaque vérin de support (60A, 60B, 60C, 60D) est associée une soupape de vérin de support (50), au moyen de laquelle le vérin de support (60A, 60B, 60C, 60D) peut être relié individuellement à la conduite hydraulique principale (12A, 12B) qui lui est associée ou en être séparé.

6. Système hydraulique (10) selon l'une quelconque des revendications précédentes, présentant la caractéristique supplémentaire suivante :
a. le système hydraulique (10) présente deux conduites de retour séparées (16A, 16B) qui relient chacune au moins une chambre de pression agissant dans la direction de rétraction d'au moins un vérin de support (60A, 60B, 60C, 60D) ou d'au moins un vérin de travail (70) à respectivement l'une des pompes hydrauliques.

7. Système hydraulique (10) selon la revendication 6, avec la caractéristique supplémentaire suivante :
b. le système hydraulique (10) présente une deuxième soupape principale (42) par laquelle les deux conduites de retour (16A, 16B) peuvent être reliées entre elles ou séparées l'une de l'autre.

8. Système hydraulique (10) selon l'une quelconque des revendications précédentes, présentant la caractéristique supplémentaire suivante :
a. un réservoir de fluide hydraulique commun (90) est prévu pour alimenter les au moins deux pompes hydrauliques (20A, 20B).

9. Véhicule (100), avec la caractéristique suivante :
a. le véhicule (100) présente au moins deux supports de plancher déployables (170),
**caractérisé par** la caractéristique supplémentaire suivante :
b. un système hydraulique (10) selon l'une quelconque des revendications 1 à 8 est prévu pour déployer et rétracter les supports de plancher (170).

10. Véhicule (100) selon la revendication 9, avec au moins l'une des caractéristiques supplémentaires suivantes :
a. le véhicule (100) est réalisé sous forme de remorque de caravane, ou
b. le véhicule (100) est réalisé sous forme de camping-car, ou
c. le véhicule (100) est réalisé sous forme de véhicule utilitaire.

11. Véhicule (100) selon la revendication 9 ou 10, avec les caractéristiques supplémentaires suivantes :
a. le véhicule (100) présente un système de déplacement pour déplacer le véhicule, et
b. le système de déplacement est entraîné par au moins un moteur hydraulique ou au moins un vérin de travail du système hydraulique.

12. Conteneur (110), avec la caractéristique suivante :
a. le conteneur (110) présente au moins deux supports de plancher déployables (170),
**caractérisé par** la caractéristique supplémentaire suivante :
b. un système hydraulique (10) selon l'une quelconque des revendications 1 à 8 est prévu pour déployer et rétracter les supports de plancher (170).

13. Véhicule (100) ou conteneur (110) selon l'une quelconque des revendications 9 à 12, avec la caractéristique supplémentaire suivante :
a. le véhicule (100) ou le conteneur (110) présente un caisson de déploiement (120), un élément de fermeture (130), une plate-forme de levage ou un système d'accès (150) qui peut être déplacé avec un vérin de travail (70) du système hydraulique (10).

14. Procédé d'exploitation d'un système hydraulique (10) selon les revendications 1 à 8, avec au moins l'une des caractéristiques suivantes :
a. lorsque la soupape principale (40) est ouverte, au moins un vérin de support (60A, 60B) de l'une des conduites hydrauliques principales (12A) est d'abord partiellement déployé, et
b. ensuite, lorsque la soupape principale (40) est ouverte, au moins un vérin de support (60C, 60D) de l'autre conduite hydraulique principale (12B) est partiellement déployé, et
c. la soupape principale (40) est ensuite fermée, et
d. les vérins de support (60A, 60B, 60C, 60D) des deux conduites hydrauliques principales (12A, 12B) continuent à être déployés simultanément par les pompes hydrauliques respectives (20A, 20B).

15. Procédé d'exploitation d'un système hydraulique (10) selon les revendications 1 à 8 et notamment selon la revendication 14, avec au moins l'une des caractéristiques suivantes :
a. pendant le déploiement d'un vérin de support (60A, 60B, 60C, 60D), celui-ci est alimenté par les deux pompes hydrauliques (20A, 20B) pendant une phase partielle et n'est alimenté que par une pompe hydraulique (20A, 20B) pendant une autre phase partielle, et/ou
b. lorsqu'une défaillance de l'une des pompes hydrauliques (20A, 20B) est détectée, la soupape principale (40) est ouverte de telle sorte que la pompe hydraulique restante (20A, 20B) en état de fonctionnement peut alimenter tous les vérins de support (60A, 60B, 60C, 60D), et/ou
c. le procédé prévoit qu'en fonction de la situation, une adaptation d'un débit des pompes hydrauliques (20A, 20B) est effectuée en modifiant la vitesse de rotation des pompes hydrauliques (20A, 20B) ou en désactivant l'une des pompes hydrauliques (20A, 20B).
